Europäisches Patentamt

European Patent Office

Office européen des brevets

(19)

(11) Veröffentlichungsnummer: **0 275 448**
**A1**

(12) **EUROPÄISCHE PATENTANMELDUNG**

(21) Anmeldenummer: **87118086.5**

(22) Anmeldetag: **07.12.87**

(51) Int. Cl.4 **H04Q 3/545 , H04M 3/24 , G06F 12/06**

(30) Priorität: **23.12.86 DE 3644305**

(43) Veröffentlichungstag der Anmeldung:
**27.07.88 Patentblatt 88/30**

(84) Benannte Vertragsstaaten:
**AT BE CH DE FR GB IT LI NL**

(71) Anmelder: **Siemens Aktiengesellschaft Berlin und München**
**Wittelsbacherplatz 2**
**D-8000 München 2(DE)**

(72) Erfinder: **Wehrend, Klaus, Dipl.-Ing.**
**Rosenstrasse 13**
**D-8034 Germering(DE)**
Erfinder: **Spath, Rainer, Dipl.-Ing.**
**Wendelsteinstrasse 2 b**
**D-8039 Puchheim(DE)**

(54) **Verfahren zur Inbetriebnahme eines programmgesteuerten modular aufgebauten Kommunikationssystems.**

(57) Die Erfindung betrifft ein Verfahren zur Inbetriebnahme eines programmgesteuerten modular aufgebauten Kommunikationssystems, bei dem die einzelnen durch die System-Software gesteuerten Module aus einer Vielzahl von einzelnen Baugruppen bestehen, auf denen jeweils eine bestimmte Hardware sowie eine bestimmte Firmware realisiert ist. Zur automatischen Erkennung von Unverträglichkeiten zwischen System-Software und Hard-und Firmware werden die einzelnen Baugruppen und die darauf befindliche Firmware mit Klemmungen versehen, anhand derer bei einer Inbetriebnahme die Verträglichkeit zwischen Soft-, Firm-und Hardware überprüft wird.

## Verfahren zur Inbetriebnahme eines programmgesteuerten modular aufgebauten Kommunikationssystems

Die Erfindung betrifft ein Verfahren zur Inbetriebnahme eines programmgesteuerten modular aufgebauten Kommunikationssystems, bei dem die einzelnen durch die System-Software gesteuerten Module aus einer Vielzahl von einzelnen Baugruppen bestehen, auf denen jeweils eine bestimmte Hardware sowie eine bestimmte Firmware realisiert ist.

Bei einem derartigen programmgesteuerten System muß die System-Software mit der Hard- und Firmware der gesteckten Baugruppen fehlerfrei zusammenarbeiten. Änderungen in der Soft-, Hard- oder Firmware eines Systems können nicht immer kompatibel zueinander durchgeführt werden, so daß nur bestimmte Software-Zustände mit bestimmten Firmware-und Hardware-Zuständen zusammenpassen. Das Problem besteht bei derartigen programmgesteuerten Systemen darin, Unverträglichkeiten zwischen der Software einerseits und der Firm-bzw. Hardware andererseits zu erkennen. Bei bekannten programmgesteuerten Kommunikationssystemen ist eine Kompatibilitätskontrolle zwischen der System-Software und der Firm-bzw. Hardware der Baugruppen nur außerhalb der Anlagen durch Führen von umfangreichen Listen und von Hand durchgeführten Kontrollen bei der Baugruppendisposition möglich. Eine bestehende und nicht erkannte Unverträglichkeit wird erst durch ein Fehlverhalten des Systems erkannt.

Aufgabe der vorliegenden Erfindung ist es daher, ein Verfahren der eingangs genannten Art anzugeben, welches eine automatische Erkennung von Unverträglichkeiten zwischen System-Software und Firm-bzw. Hardware der einzelnen Baugruppen ermöglicht.

Diese Aufgabe wird für ein Verfahren der eingangs genannten Art dadurch gelöst, daß sowohl die einzelnen Baugruppen als auch die auf den einzelnen Baugruppen vorhandene Firmware mit einer Kennung versehen werden, und daß bei einer Inbetriebnahme pro Baugruppe anhand der Kennung überprüft wird, ob die Baugruppe bzw. die auf ihr enthaltene Firmware mit der aktuellen System-Software verträglich ist.

Auf Grund des erfindungsgemäßen Verfahrens ist eine automatische Erkennung von Unverträglichkeiten zwischen System-Software und Firm-bzw. Hardware einer Baugruppe möglich. Bei Inbetriebnahme des Systems werden die gesteckten Baugruppen erkannt und sowohl die Baugruppen-Kennung als auch die Firmware-Kennung in das System gemeldet. Hier wird festgestellt, ob die Baugruppe und die Firmware mit der aktuellen System-Software verträglich ist. Ist dies nicht der Fall, wird eine Meldung an das Betriebsterminal der Anlage gegeben und die entsprechende Baugruppe wird nicht in Betrieb genommen.

Eine zweckmäßige Weiterbildung der Erfindung ist dadurch gekennzeichnet, daß mittels der Kennung jeweils Typ und Stand der Baugruppe bzw. der auf der Baugruppe vorhandenen Firmware angegeben wird, wobei der jeweilige Stand den Leistungsumfang und den Änderungsstand innerhalb eines vorgegebenen Leistungsumfangs beschreibt und bei jeder erfolgten Änderung hochgezählt wird. Auf diese Weise ist der Funktionsstand und der Änderungsstand jedes Typs anhand einer einfachen Zahl erkennbar.

Eine weitere zweckmäßige Ausgestaltung des erfindungsgemäßen Verfahrens ist dadurch gekennzeichnet, daß in einer System-Ausbautabelle pro Einbauplatz einer Baugruppe der Sollausbau der einzubauenden Baugruppe festgelegt wird und bei der Inbetriebnahme mit dem Ist-Ausbau verglichen wird, und daß in einer Verträglichkeitstabelle für die Baugruppe der minimale Stand der Baugruppe sowie der dazugehörigen Firmware, mit dem die aktuelle System-Software kompatibel ist, abgelegt wird und bei der Inbetriebnahme mit dem tatsächlichen Stand der Baugruppe sowie der dazugehörigen Firmware verglichen wird. Auf diese Weise ist sichergestellt, daß die Kompatibilitätsprüfung ohne großen Aufwand mittels einfacher Vergleiche durchgeführt werden kann.

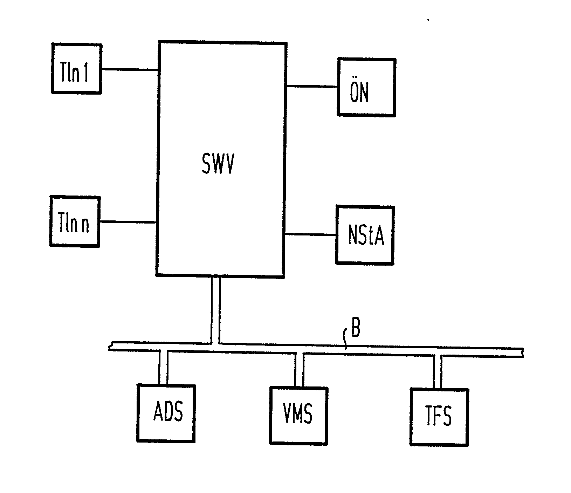

Die vorliegende Erfindung soll im folgenden näher beschrieben werden. In der Figur ist der prinzipielle Aufbau eines programmgesteuerten modular aufgebauten Kommunikationssystems dargestellt. Ein wesentlicher Bestandteil des dargestellten Kommunikationssystems ist ein ein digitales Koppelnetz und eine zentrale Steuerungseinrichtung aufweisendes Durchschaltemodul SWU, an welches neben dem öffentlichen Fernsprechnetz ÖN und privaten Fernsprechnetzen NStA einzelne Teilnehmerstationen Tln 1 bis Tln n angeschlossen sind. Das Durchschaltemodul SWU ist über ein Bussystem B mit einem Betriebs-und Datenmodul ADS verbunden, welches der Steuerung der systemtechnischen Peripherie sowie der Speicherung von Systemdateien dient. Weiterhin ist an das Bussystem B ein Sprachinformationsmodul VMS und ein Text-und Faxmodul TFS angeschlossen, deren genaue Funktionen im Zusammenhang mit der vorliegenden Erfindung aber nicht interessant sind.

Die einzelnen Module des Kommunikationssystems bestehen jeweils aus peripheren und zentralen Baugruppen, die zum Teil über eigene Mikroprozessoren verfügen. Der Aufbau und die Aufgaben der einzelnen Baugruppen ist zum Verständnis der vorliegenden Erfindung nicht wesentlich und wird daher im Rahmen der Beschreibung auch nicht näher erläutert. Aus der vorstehenden kurzen Beschreibung eines modular aufgebauten Kommunikationssystems ist jedoch ersichtlich, daß zum Funktionieren des Gesamtsystems ein fehlerfreies Zusammenarbeiten zwischen der System-Software und der Hardware bzw. Firmware der einzelnen Baugruppen notwendig ist.

Um eine automatische Erkennung von Unverträglichkeiten zwischen System-Software und Hard-bzw. Firmware der einzelnen Baugruppen zu ermöglichen, ist jede Baugruppe und jede darauf vorhandene Firmware mit einer Kennung versehen. Diese Kennung kenn zeichnet sowohl den Typ als auch den Stand der Baugruppe bzw. der Firmware. Dabei gibt der Stand jeweils den Zustand sowie den Funktionsstand an, wobei der Funktionsstand den Leistungsumfang beschreibt, und der Zustand den Änderungsstand innerhalb eines bestimmten Funktionsstandes. Innerhalb der Kennung werden Funktionsstand und Zustand zu einem sogenannten Stand zusammengefaßt. Dieser Stand wird bei jeder Änderung hochgezählt. Es ist also zu erkennen, daß pro Typ einer Baugruppe bzw. pro Typ einer vorhandenen Firmware mehrere Stände möglich sind. Der jeweilige Stand wird durch eine bestimmte Zahl gekennzeichnet. Für das fehlerfreie Zusammenarbeiten zwischen der System-Software und der Hard-bzw. Firmware des Systems sind die einzelnen Stände der Baugruppen bzw. der Firmware von ausschlaggebender Bedeutung. Für jede System-Software steht fest, mit welchen Ständen der entsprechenden Firm-bzw. Hardware sie fehlerfrei zusammenarbeitet. Daher müssen bei jeder Inbetriebnahme die einzelnen Stände von Baugruppen und darauf befindlicher Firmware festgestellt werden und auf ihre Verträglichkeit hin untersucht werden. Unter Inbetriebnahme des Kommunikationssystems soll hier sowohl eine Erstinbetriebnahme als auch eine Wiederinbetriebnahme teilsystem-oder systemweit verstanden werden.

Die Verträglichkeitsprüfung erfolgt mittels einer Verträglichkeitstabelle, die für eine bestimme System-Software aufgestellt wird. In diese Verträglichkeitstabelle wird pro Baugruppentyp der minimale Baugruppenstand, mit dem die System-Software kompatibel ist, sowie die Kennung der zu dieser Baugruppe gehörenden Firmware mit dem minimalen Firmwarestand abgelegt.

Der minimale Stand besagt, daß die jeweilige System-Software mit einer Baugruppe bzw. einer Firmware, deren Stand dem minimalen Stand entspricht bzw. größer als der minimale Stand ist, fehlerfrei zusammenarbeitet. Ist der Stand der Baugruppe bzw. der darauf befindlichen Firmware kleiner als der minimale Stand, so ist ein fehlerfreies Zusammenarbeiten nicht möglich.

Bevor die Verträglichkeitsprüfung mit Hilfe der Verträglichkeitstabelle durchgeführt wird, wird anhand einer System-Ausbautabelle festgestellt, ob die einzelnen Einbauplätze mit dem richtigen Baugruppentyp bestückt sind. Diese System-Ausbautabelle enthält pro Einbauplatz Angaben über den Sollausbau und Angaben über den Istausbau. Die Angaben über den Istausbau werden während der Inbetriebnahme aus der Baugruppe herausgelesen und geben den Baugruppentyp sowie den Baugruppenstand und die zugehörige Firmware-Kennung an. Entspricht der Istausbau gleich dem Sollausbau, wird anschließend anhand der Verträglichkeitstabelle ermittelt, ob bei dem entsprechenden Baugruppentyp der Baugruppenstand sowie die Firmware-Kennung den Erfordernissen entspricht. Ist dies nicht der Fall, wird eine Meldung an das Betriebsterminal des Systems weitergeleitet und die entsprechende Baugruppe wird nicht in Betrieb genommen.

Der gleiche Ablauf erfolgt, wenn während des laufenden Betriebes ein Baugruppentausch vorgenommen wird. Für die gesteckten Baugruppen wird der minimale Stand der Hardware und der Firmware überprüft. Damit ist ein unerkanntes versehentliches Stecken von Baugruppen mit einem veralteten Stand sowohl bei der Erstinbetriebnahme des Systems als auch während des laufenden Betriebes nicht möglich.

**Ansprüche**

1. Verfahren zur Inbetriebnahme eines programmgesteuerten modular aufgebauten Kommunikationssystems, bei dem die einzelnen durch die System-Software gesteuerten Module aus einer Vielzahl von einzelnen Baugruppen bestehen, auf denen jeweils eine bestimmte Hardware sowie eine bestimmte Firmware realisiert ist, **dadurch gekennzeichnet,** daß sowohl die einzelnen Baugruppen als auch die auf den einzelnen Baugruppen vorhandene Firmware mit einer Kennung versehen werden, und daß bei einer Inbetriebnahme pro Baugruppe anhand der Kennung überprüft wird, ob die Baugruppe bzw. die auf ihr enthaltene Firmware mit der aktuellen System-Software verträglich ist.

2. Verfahren nach Anspruch 1, **dadurch gekennzeichnet,** daß mittels der Kennung jeweils Typ und Stand der Baugruppe bzw. der auf der Baugruppe vorhandenen Firmware angegeben wird, wobei der jeweilige Stand den Leistungsumfang und den Änderungsstand innerhalb eines vorgegebenen Leistungsumfangs beschreibt und bei jeder erfolgten Änderung hochgezählt wird.

3. Verfahren nach Anspruch 2, **dadurch gekennzeichnet,** daß in einer System-Ausbautabelle pro Einbauplatz einer Baugruppe der Sollausbau der einzubauenden Baugruppe festgelegt wird und bei der Inbetriebnahme mit dem Ist-Ausbau verglichen wird, und daß in einer Verträglichkeitstabelle für jede Baugruppe der minimale Stand der Baugruppe sowie der dazugehörigen Firmware, mit dem die aktuelle System-Software kompatibel ist, abgelegt wird und bei der Inbetriebnahme mit dem tatsächlichen Stand der Baugruppe sowie der dazugehörigen Firmware verglichen wird.

<table>
<tr><th colspan="2" align="center">Europäisches Patentamt</th><th align="center">EUROPÄISCHER RECHERCHENBERICHT</th><th>Nummer der Anmeldung</th></tr>
</table>

EP 87 11 8086

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 041 406 (HONEYWELL)<br>* Zusammenfassung; Seite 1, Zeile 22 - Seite 2, Zeile 23 *<br>----- | 1-3 | H 04 Q 3/545<br>H 04 M 3/24<br>G 06 F 12/06 |

RECHERCHIERTE SACHGEBIETE (Int. Cl.4)

H 04 M
H 04 Q
G 06 F

Der vorliegende Recherchenbericht wurde für alle Patentansprüche erstellt

| Recherchenort | Abschlußdatum der Recherche | Prüfer |
|---|---|---|
| DEN HAAG | 06-04-1988 | VANDEVENNE M.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.......................................................
& : Mitglied der gleichen Patentfamilie, übereinstimmendes Dokument

EPO FORM 1503 03.82 (P0403)